# FASCICULE DE BREVET EUROPEEN

(11) **EP 3 574 572 B1**
(45) Date de publication et mention de la délivrance du brevet: **31.03.2021**
(21) Numéro de dépôt: 18700900.6
(22) Date de dépôt: 17.01.2018
(51) Int. Cl.: H02K 9/08, H02K 9/14, H02K 5/20, H02K 5/18, H02K 1/32, H02K 9/19, H02K 1/27

(54) **MACHINE ELECTRIQUE TOURNANTE FERMEE COMPORTANT UN SYSTEME DE REFROIDISSEMENT INTERNE PAR AIR DES AIMANTS DANS LE ROTOR**
GESCHLOSSENE ELEKTRISCHE DREHMASCHINE MIT EINEM INTERNEN LUFTKÜHLSYSTEM DER MAGNETEN IM ROTOR
CLOSED ROTATING ELECTRICAL MACHINE COMPRISING AN INTERNAL AIR COOLING SYSTEM OF THE MAGNETS IN THE ROTOR

(30) Priorité: 25.01.2017 FR 1750583
(43) Date de publication de la demande: 04.12.2019
(73) Titulaire: IFP Energies nouvelles, 92852 Rueil-Malmaison (FR); Mavel S.r.l., 11026 Pont Saint Martin (AO) (IT)
(72) Inventeur: DIB, Wissam, 92150 Suresnes (FR); FAVRE, Luca, 11010 Valpelline (AO) (IT); BETTONI, Davide, Settimo Vittone TO (IT)
(74) Mandataire: Leoncini, Alberto
(86) Numéro de dépôt international: PCT/EP2018/051120
(87) Numéro de publication internationale: WO 2018/137984

(56) Documents cités:
- EP-A1- 2 993 762
- WO-A1-2015/136422
- WO-A1-2016/188764
- DE-C- 616 902
- FR-A- 736 474
- FR-A- 1 424 667
- JP-A- H09 233 767
- US-A1- 2009 273 246
- US-A1- 2012 074 801

## Description

### Domaine de l'invention

La présente invention concerne le domaine des machines électriques tournantes, en particulier le refroidissement de machines électriques tournantes.

Elle concerne plus particulièrement le refroidissement d'une machine électrique tournante fermée à réluctance synchrone variable.

### Contexte général

Une machine électrique tournante comporte classiquement une partie fixe, le stator, et une partie mobile en rotation, le rotor, disposées coaxialement l'une dans l'autre. Le rotor est généralement logé à l'intérieur du stator qui porte des bobinages électriques générant un champ magnétique permettant d'entrainer en rotation le rotor. Le rotor est typiquement formé d'un corps formé d'un empilage de tôles, et placé sur un arbre de rotation. Ces tôles comprennent des logements pour des aimants permanents ou des bobines formant des pôles magnétiques à la périphérie du rotor. Les aimants peuvent apparaître à la surface du rotor ou être complètement intégrés au sein du rotor. Dans le cas des machines électriques tournantes à réluctance synchrone variable, le rotor comporte généralement des aimants permanents logés à proximité de barrières de flux portées par ce rotor, ces barrières de flux étant typiquement des espaces vides. On parle aussi de machine synchro-réluctante assistée par des aimants permanents.

Les machines électriques s'échauffent du fait des pertes électromagnétiques (pertes par effet Joule et pertes fer) et mécaniques. Cet échauffement nuit à leur fonctionnement et conduit à la dégradation de leurs performances. Par exemple, si les aimants ne sont pas refroidis, le flux magnétique est moins intense, ce qui conduit à une perte de couple et donc une dégradation des performances de la machine électrique. Une démagnétisation irréversible des aimants peut se produire. Le bobinage est également sensible aux élévations de température : plus la température du bobinage est élevée, plus la conductivité électrique du cuivre et la durée de vie du bobinage sont réduites. La résistance du cuivre augmentant, il y a également une perte de rendement. Les divers composants électromagnétiques d'une machine électrique tournante, ainsi que certains matériaux isolants utilisés dans les pièces de la machine électrique, sont ainsi sensibles à l'échauffement produit en fonctionnement, et leur refroidissement est indispensable pour dissiper la chaleur produite, afin de conserver un bon rendement de la machine, d'assurer une répétabilité de ses performances, d'allonger sa durée de vie et de limiter la maintenance.

La recherche d'un refroidissement performant est donc une préoccupation majeure pour les fabricants et les intégrateurs de machines électriques tournantes.

Différents types de refroidissement existent, souvent adaptés à la puissance de la machine, parmi lesquels les systèmes de refroidissement par air, généralement d'efficacité moindre et agressifs pour l'intérieur de la machine, les systèmes de refroidissement par liquide, par exemple par eau, notamment utilisés dès que les pertes sont importantes comme dans le cas des moteurs de traction électriques, ou par huile. D'autres systèmes de refroidissement par hélium ou azote liquide peuvent être utilisés pour les machines électriques de centrales électriques.

Bien que le refroidissement par air de la machine, plus précisément de la carcasse (ou carter) de la machine contenant le rotor et le stator, constitue une solution intéressante économiquement, comparativement aux autres systèmes de refroidissement, il présente généralement une efficacité moindre, et est ainsi souvent cantonné au refroidissement de machines électriques peu puissantes. C'est le cas par exemple dans les applications de traction où le refroidissement par air est typiquement utilisé pour des moteurs électriques d'une puissance inférieure à 20 kW. Au-delà un système de refroidissement par liquide est souvent mis en œuvre.

Par ailleurs, le refroidissement par air peut requérir la circulation d'air entre l'extérieur et l'intérieur de la machine électrique, ce qui ajoute à la limitation de son champ d'application, réservé dans ce cas à des machines électriques « ouvertes », c'est-à-dire non étanches.

Dans les systèmes de refroidissement par air de machines électriques « fermées » (étanches), qui se limitent au refroidissement de la partie extérieure du carter de la machine, une convection forcée d'air au moyen d'un ventilateur solidaire de l'arbre est réalisée, et la chaleur générée au rotor est cédée à l'air de l'entrefer et au stator, elle-même étant évacuée par le carter. Cependant, de tels systèmes n'évacuent pas de manière satisfaisante la chaleur générée au sein de la machine, notamment au niveau du rotor, ce qui rend difficile son utilisation, tout particulièrement pour le refroidissement de machines électriques à rotation très rapide. L'efficacité de tels systèmes de refroidissement par air de machines fermées est donc limitée, et leur utilisation est réservée là encore à des machines de faible puissance.

FR736474A et US2012/074801A1 décrivent des dispositifs de refroidissement de machines électrique tournantes.

### Objectifs et résumé de l'invention

La présente invention a pour objectif de surmonter les inconvénients de l'art antérieur mentionné, et de fournir un système de refroidissement performant pour une machine électrique tournante fermée, en vue de garantir les performances et le rendement souhaités de la machine électrique.

En particulier, la présente invention vise à permettre un refroidissement efficace de l'arbre, du rotor, et plus spécifiquement des aimants permanents logés à proximité de barrières de flux portés par le rotor, et des têtes de bobines, d'une machine électrique tournante pouvant présenter un indice de protection « IP » élevé conformément à la norme EN 60529, typiquement un indice de protection IP67.

L'invention vise en outre à fournir un système de refroidissement qui ne consomme pas (système passif) ou peu d'énergie électrique pour fonctionner, et qui limite les pertes mécaniques liées au fonctionnement du système.

Ainsi, pour atteindre au moins l'un des objectifs susvisés, parmi d'autres, la présente invention propose une machine électrique tournante fermée comportant :
- un stator disposé dans une carcasse et comportant des bobines ;
- un rotor comprenant un corps fixé à un arbre de rotation tournant autour d'un axe central (X), le rotor étant monté rotatif dans le stator et comprenant des premiers évidements logeant des générateurs de flux magnétique et des deuxièmes évidements formant des barrières de flux magnétiques, les premiers et deuxièmes évidements étant allongés et traversant le corps de rotor selon l'axe (X);
- une paire de paliers supportant chacun une extrémité de l'arbre de rotation ;
- un flasque avant et un flasque arrière disposés respectivement à deux extrémités opposées avant et arrière de la carcasse, les flasques avant et arrière comportant chacun des moyens d'étanchéité pour fermer de manière étanche la carcasse, une face interne, une face externe, et un logement central pour recevoir un des paliers, la face interne des flasques comportant des ailettes agencées sur une partie périphérique du logement central, et
- un système de refroidissement comportant une paire de ventilateurs internes, chaque ventilateur interne étant monté fixe sur l'arbre de rotation entre le corps du rotor et un paliers, pour créer lors de la rotation de l'arbre, un premier écoulement d'air à double sens dans les deuxièmes évidements du rotor et un deuxième écoulement d'air entre chaque ventilateur interne et la face interne du flasque avant ou arrière, dans laquelle chaque ventilateur interne comporte une face interne, une face externe, une ouverture centrale pour la passage de l'arbre de rotation, et une alternance de secteurs radiaux ouverts et de secteurs radiaux fermés divisant la surface du ventilateur interne et séparés par des parois radiales orthogonales à l'axe (X) formant des lames saillantes sur la face externe du ventilateur interne, les secteurs radiaux ouverts comportant des ouvertures et permettant l'entrée d'air dans les évidements du rotor, et les secteurs radiaux fermés comportant une surface en forme de rampe et permettant la sortie de l'air circulant dans les évidements du rotor.

Avantageusement, les ventilateurs internes ont une forme circulaire, leur face interne comportant une partie plane s'appuyant sur le corps du rotor et orthogonale à l'axe central (X), la partie plane orthogonale se prolongeant par une partie plane inclinée au niveau de chaque secteur radial fermé et par une ouverture au niveau de chaque secteur radial ouvert.

De préférence, le rotor comporte n pôles magnétiques crées par les générateurs de flux et les barrières de flux, chaque pôle magnétique étant recouvert par deux secteurs radiaux fermé et ouvert adjacents d'un ventilateur interne, et les deux ventilateurs internes étant montés décalés angulairement sur l'arbre de rotation de manière à faire correspondre un secteur radial ouvert d'un ventilateur interne avec un secteur radial fermé de l'autre ventilateur interne le long d'un même axe sensiblement parallèle à l'axe central (X).

De préférence, l'ensemble des secteurs radiaux ouverts et fermés d'un ventilateur interne est égal à 2.n, et les deux ventilateurs internes sont montés décalés sur l'arbre de rotation d'un angle β égal à 360/(2.n), n étant un entier pair compris entre 2 et 12, et de préférence égal à 4 ou 8.

Avantageusement, les ventilateurs internes et les ailettes de la face interne des flasques sont aptes à diriger l'air de manière radiale vers les têtes des bobines du stator, puis à retourner le flux d'air depuis les têtes de bobines vers le centre des flasques d'abord selon une direction parallèle à l'axe (X) au niveau des têtes des bobines, puis radialement vers l'arbre de rotation, pour former le deuxième écoulement d'air créé entre chaque ventilateur interne et la face interne du flasque avant ou arrière.

Les ailettes de la face interne des flasques peuvent être planes et avoir une forme générale de trapèze comportant des bases orthogonales à l'axe central (X) et un côté opposé au logement présentant une concavité.

Avantageusement, la machine comprend en outre des moyens de refroidissement externe pour refroidir la carcasse et les flasques avant et arrière.

Selon un mode de réalisation, les moyens de refroidissement externe comprennent un ventilateur externe disposé en regard de la face externe du flasque arrière et monté fixe sur l'arbre de rotation, pour envoyer de l'air extérieur le long de la carcasse en direction du flasque avant.

Selon ce mode de réalisation, la carcasse peut avoir une surface externe comportant un ensemble d'ailettes de refroidissement allongées sensiblement selon un axe parallèle à l'axe (X) de l'arbre de rotation, et le flasque arrière comporter une partie centrale en forme de couronne reliée à une partie périphérique cylindrique et au moins une ouverture disposée entre la partie centrale et la partie périphérique du flasque arrière pour diriger l'air extérieur envoyé par le ventilateur externe dans des passages formés par l'ensemble des ailettes de refroidissement de la surface externe de la carcasse.

Le ventilateur externe comporte de préférence une roue d'entrainement de l'air extérieur fixée à l'arbre de rotation et une plaque de protection comportant des orifices pour l'entrée de l'air extérieur, la plaque étant fixée à la partie périphérique du flasque arrière.

Selon un autre mode de réalisation, les moyens de refroidissement externe comportent un circuit de liquide de refroidissement comprenant une entrée du liquide de refroidissement, une sortie du liquide de refroidissement, et un réseau de conduits en contact avec la carcasse, dans lequel le liquide de refroidissement circule pour refroidir la carcasse et les flasques avant et arrière, et dans laquelle ledit réseau de conduits est de préférence un serpentin intégré dans la carcasse

De préférence, le liquide de refroidissement comporte de l'eau.

La machine électrique selon l'invention est de préférence une machine électrique à réluctance synchrone.

D'autres objets et avantages de l'invention apparaîtront à la lecture de la description qui suit d'exemples de réalisations particuliers de l'invention, donnés à titre d'exemples non limitatifs, la description étant faite en référence aux figures annexées décrites ci-après.

### Brève description des figures

Les figures 1A et 1B sont des vues en perspective, respectivement de l'avant et de l'arrière, de la machine électrique selon un premier mode de réalisation de l'invention dans lequel le refroidissement de la machine est intégralement réalisé par air.
La figure 2 est une vue en perspective de la partie tournante de la machine électrique selon l'invention sur laquelle sont montés deux ventilateurs internes.
La figure 3 est une vue en coupe radiale du rotor de la machine électrique selon l'invention.
Les figures 4A et 4B sont des vues en perspective, respectivement de la face externe et de la face interne, d'un ventilateur interne de la machine électrique selon l'invention.
Les figures 5A et 5B sont des vues de face respectivement de la face externe et de la face interne d'un ventilateur interne de la machine électrique selon l'invention.
Les figures 6A, 6B et 6C sont respectivement un schéma de la face externe d'un ventilateur interne de la machine électrique selon l'invention, une vue en coupe de celui-ci selon une section A-A (6B) et selon une section B-B (6C), les deux sections étant dessinées sur le schéma de la figure 6A.
La figure 7 est une vue de profil de la partie tournante de la machine électrique selon l'invention intégrant les deux ventilateurs internes.
Les figures 8A et 8B sont deux mêmes vues de face d'une extrémité (avant) de la partie tournante de la machine électrique selon l'invention intégrant un ventilateur interne, la figure 8B représentant le ventilateur interne en transparence.
Les figures 9A et 9B illustrent la circulation de l'air dans le rotor, et sont respectivement une vue de face d'une extrémité de la partie tournante de la machine électrique selon l'invention et une vue en coupe selon une section C-C dessinée sur la figure 9A.
Les figures 10A et 10B sont des vues en perspective, respectivement de la face interne et de la face externe, du flasque avant de la machine électrique selon le premier mode de réalisation de l'invention.
Les figures 11A et 11B sont des vues en perspective, respectivement de la face interne et de la face externe, du flasque arrière de la machine électrique selon le premier mode de réalisation de l'invention.
La figure 12 est une vue en coupe longitudinale de la machine électrique selon le premier mode de réalisation de l'invention.
La figure 13 est une vue de dessus de la machine électrique selon le premier mode de réalisation de l'invention.
Les figures 14A, 14B et 14C sont des vues en perspective avec arrachement de la partie arrière (figure 14A) et de la partie avant (figure 14B) de la machine électrique selon le premier mode de réalisation de l'invention, ainsi qu'une vue en coupe longitudinale (14C) de la machine électrique illustrant le flux d'air externe généré par le ventilateur externe et circulant à l'extérieur de la carcasse
Les figures 15A et 15B sont respectivement une vue en plan de la face arrière de la machine électrique et une vue en perspective de cette même face arrière, selon le premier mode de réalisation de l'invention.
Les figures 16A et 16B sont des vues en perspective, respectivement de l'avant et de l'arrière, de la machine électrique selon un deuxième mode de réalisation de l'invention dans lequel le refroidissement de la machine est réalisé par air et par liquide.
La figure 16C est une vue en coupe longitudinale partielle de la machine électrique selon le deuxième mode de réalisation de l'invention.
Les figures 17A, 17B et 17C sont des vues partielles en perspective avec arrachement de la partie avant (figure 17A) et de la partie arrière (figure 17B) de la machine électrique selon le deuxième mode de réalisation de l'invention. La figure 17 C est une vue identique à celle de la figure 17B montrant en outre la circulation de liquide dans la carcasse.

Sur les figures, les mêmes références désignent des éléments identiques ou analogues.

### Description de l'invention

L'objet de l'invention est de proposer une machine électrique tournante fermée intégrant un système de refroidissement qui comprend deux ventilateurs internes montés fixes sur l'arbre du rotor, aux deux extrémités du rotor, permettant une double circulation d'air à travers le rotor via les barrières de flux entourant les aimants permanents intégrés dans le rotor. Chaque ventilateur interne fait face à la face interne d'un flasque comportant des ailettes aptes à orienter le flux d'air interne créé par les ventilateurs internes et aptes à capter la chaleur du flux d'air.

Par machine électrique fermée on entend une machine électrique dont le rotor et le stator sont enfermés dans une carcasse étanche, qu'on peut aussi désigner sous le terme de carter.

Selon l'invention, la carcasse, qui contient le rotor et le stator de la machine électrique, est fermée de manière étanche par deux flasques.

Le système de refroidissement peut également comporter des moyens de refroidissement externe pour refroidir la carcasse et les flasques, qui peuvent être par air ou par liquide.

Dans la description, on entend par air interne l'air contenu dans la machine électrique fermée, plus précisément l'air enfermé dans la carcasse étanche de la machine, et par air externe l'air extérieur à la machine électrique tournante fermée.

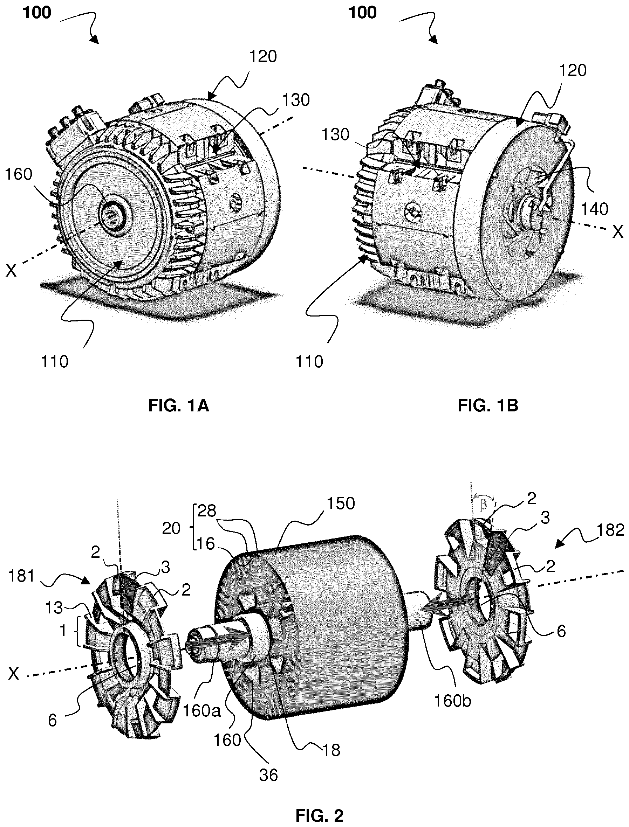

Les figures 1A et 1B, représentent une machine électrique fermée selon un premier mode de réalisation de l'invention, qui peut être utilisée comme moteur électrique de traction dans un véhicule électrique ou hybride.

Par exemple, un moteur tel que représenté aux figures 1A et 1B est un moteur à réluctance synchrone variable, aussi appelé synchro-réluctant, d'une puissance continue de 30 kW, de puissance transitoire (Peak) 52 kW, et pouvant fonctionner avec une tension d'alimentation du bus DC de 350 V. Il s'agit d'une machine synchro-réluctante assistée par des aimants permanents.

Bien que s'appliquant avantageusement aux machines électriques à réluctance synchrone variable, la présente invention ne se limite pas à cette topologie de machine électrique, et concerne plus largement tout type de machine électrique comportant un rotor avec barrières de flux constituées par des évidements traversant le rotor de part en part. Les machines électriques selon l'invention ont par exemple une puissance transitoire (peak : transitoire pendant 30 secondes) comprise entre 20 kW et 400 kW. Plus spécifiquement, les machines électriques selon le premier mode de réalisation peuvent avoir une puissance comprise entre 20 kW et 75 kW, et les machines électriques selon le deuxième mode de réalisation décrit plus loin peuvent avoir une puissance comprise entre 75 kW et 400 kW.

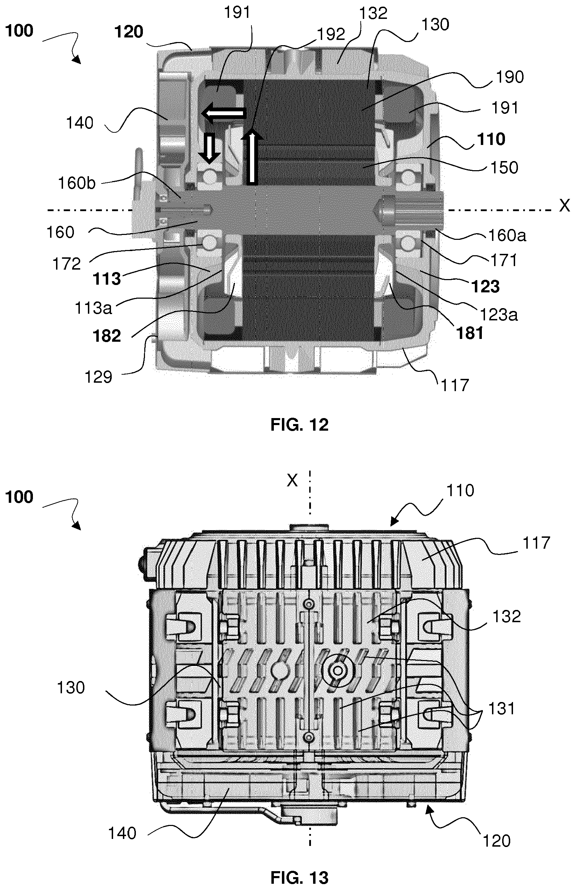

Le moteur électrique 100 comporte une carcasse 130 fermée de manière étanche par un flasque avant 110 et un flasque arrière 120. Le stator, avec ses bobines, et le rotor du moteur électrique sont contenus dans la carcasse étanche 130. L'intérieur de la carcasse 130 est mieux représenté à la figure 12, décrite en détails plus bas en relation avec le système de refroidissement du moteur. Une boîte à bornes (non référencée) dans laquelle s'effectuent les branchements est fixée sur la carcasse 130, en particulier au niveau du flasque 110 qui ferme la carcasse à l'avant du moteur. La carcasse 130 et les flasques 110 et 120 sont avantageusement en métal, par exemple en aluminium ou en fer.

Selon le premier mode de réalisation de l'invention, les moyens de refroidissement externe comprennent un ventilateur externe 140 disposé en regard de la face externe du flasque arrière 120 et monté fixe sur l'arbre de rotation 160 du rotor, pour envoyer de l'air extérieur le long de la carcasse 130 en direction du flasque avant 110.

L'arbre de rotation 160, tournant autour de l'axe central (X), est porté par les flasques avant 110 et arrière 120 disposés respectivement à deux extrémités opposées avant et arrière de la carcasse 130: le flasque avant 110, disposé à une première extrémité de la carcasse 130, supporte le côté d'entrainement de la charge de l'arbre de rotation 160, et le flasque arrière 120, disposé à une deuxième extrémité de la carcasse opposée à la première extrémité, supporte le côté opposé au côté d'entraînement de la charge de l'arbre de rotation 160.

Dans le reste de la description, on désignera par avant de la machine le côté de la machine où se fait l'entrainement d'une charge par l'arbre de rotation du rotor, et par arrière de la machine le côté opposé.

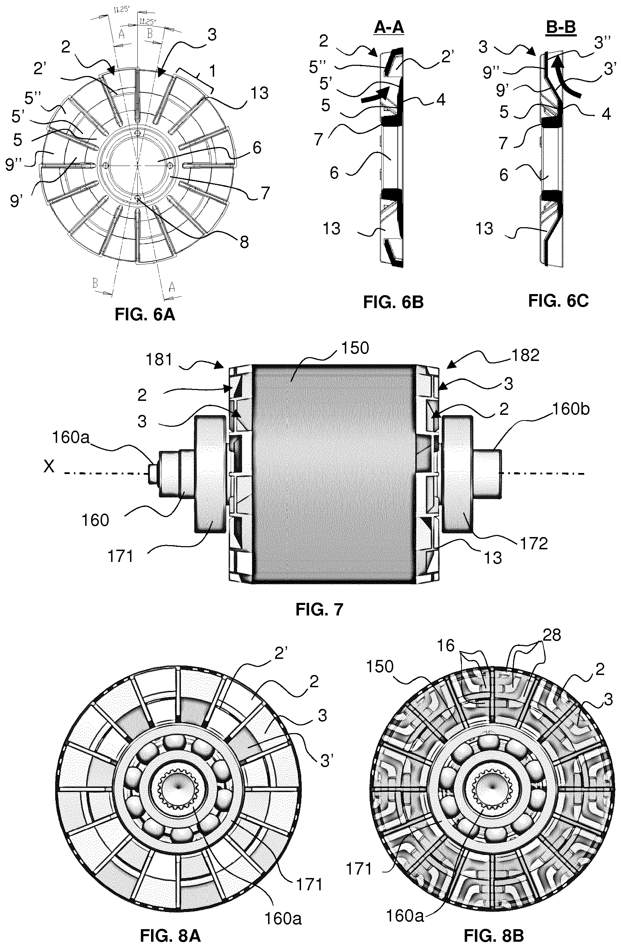

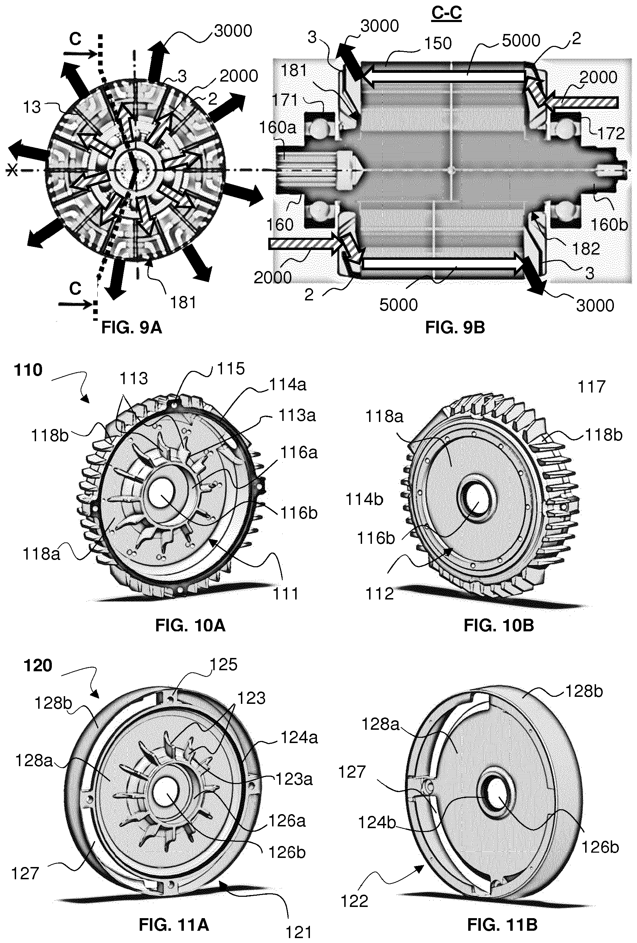

Plus spécifiquement, les flasques avant 110 et arrière 120 comportent chacun une face interne (111, 121), une face externe (112, 122), et un logement central (116a, 126a), positionné dans une partie médiane de la face interne (111, 121), pour recevoir un palier, tel que représenté sur les figures 10A, 10B, 11A et 11B. Les paliers 171 et 172, visibles sur la figure 7, supportent le côté d'entraînement d'une charge 160a de l'arbre de rotation 160 et le côté opposé au côté d'entraînement de la charge 160b de l'arbre de rotation.

Les flasques avant 110 et arrière 120 comportent des moyens d'étanchéité pour fermer de manière étanche la carcasse 130.

La figure 2 est un dessin en perspective de la partie tournante de la machine électrique sur laquelle sont montés deux ventilateurs internes 181 et 182 qui font partie du système de refroidissement de la machine selon l'invention.

En effet, selon l'invention, le système de refroidissement comporte une paire de ventilateurs internes (181, 182), chaque ventilateur interne étant monté fixe sur l'arbre de rotation 160 entre le corps du rotor 150 et un des paliers (171, 172). Lors de la rotation de l'arbre, la paire de ventilateurs internes (181, 182) disposée à l'intérieur de la carcasse 130 et solidaire de l'arbre, permet de créer d'une part un premier écoulement d'air à double sens au sein du rotor, à travers les évidements 28 formant les barrières de flux magnétique, et d'autre part un deuxième écoulement d'air entre chaque ventilateur interne et la face interne du flasque positionné en regard du ventilateur.

Les ventilateurs internes permettent en effet une injection d'air axialement dans le rotor, sous la forme d'un écoulement d'air à double sens, ce qui conduit à un refroidissement des aimants internes du rotor. Les ventilateurs permettent également, en interaction avec les flasques, de refroidir les têtes de bobine du stator, ainsi que l'arbre et le rotor de la machine électrique, par le biais du deuxième écoulement d'air à l'intérieur de la carcasse.

Avant de décrire plus en détails le fonctionnement du refroidissement à l'intérieur de la carcasse 130, la structure du rotor, puis celle des ventilateurs internes, sont détaillées ci-après.

Le rotor 150 de la machine, monté rotatif dans le stator, comporte un corps fixé à l'arbre de rotation 160. Le rotor comporte, de manière connue en soi, un empilage de tôles planes identiques 14, de préférence ferromagnétiques. Le rotor comporte une pluralité de générateurs de flux magnétiques 16, ici des aimants permanents sous forme de barreau rectangulaire de longueur sensiblement égale à la longueur du corps du rotor, entourés par barrières de flux formées par des évidements axiaux 28 (allongés selon l'axe X) traversant les tôles 14 de part en part. Les générateurs de flux magnétiques 16 sont logés dans des évidements axiaux traversant également le rotor de part en part. Les générateurs de flux magnétiques 16 et les évidements 28 formant les barrières de flux sont répartis radialement dans le rotor pour former des pôles magnétiques 20, par exemple au nombre de 8, tel qu'illustré à la figure 2.

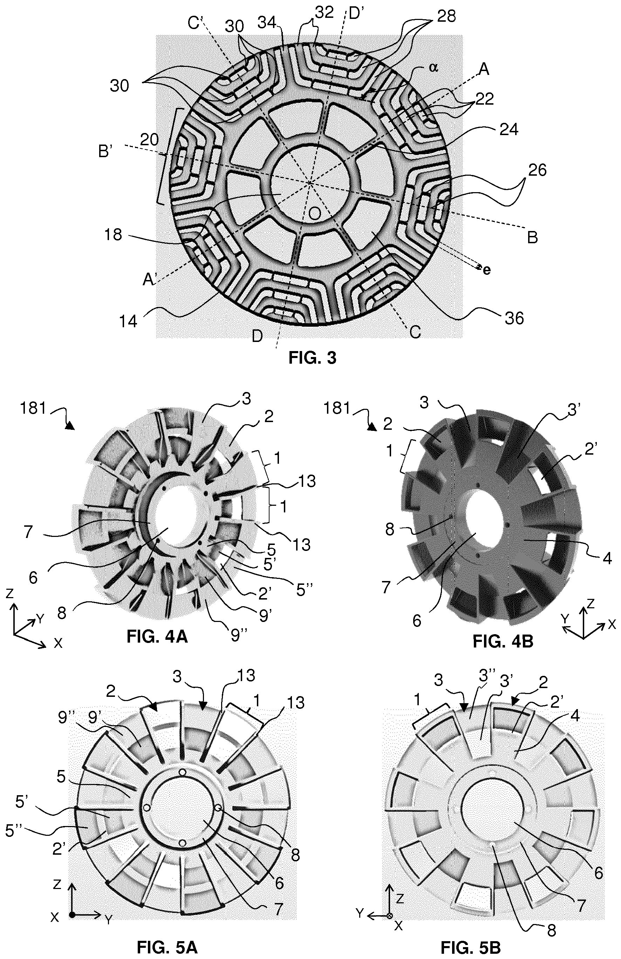

La figure 3 montre plus en détails le rotor de la machine, selon une vue en coupe radiale. Les générateurs de flux 16 ne sont pas représentés. Les tôles 14 de forme circulaire comprennent un alésage central 18 traversé par l'arbre de rotation 160 et une pluralité d'évidements axiaux qui traversent les tôles de part en part.

Comme cela est connu, les tôles sont assemblées les unes aux autres en faisant correspondre les alésages et les évidements par tous moyens connus, comme le collage, le pressage, etc. Ainsi assemblées, les tôles forment le corps du rotor 150 qui porte l'arbre 160.

Dans cette configuration, le corps comprend une première série d'évidements axiaux 22 qui loge des générateurs de flux magnétique 16 et une autre série d'évidements axiaux 28 qui permet de créer des barrières de flux magnétiques.

La première série d'évidements axiaux 22 est par exemple en forme de quadrilatère, ici rectangle. Ces évidements 22 reçoivent les générateurs de flux magnétique 16 (non représentés), e.g. des aimants permanents sous forme de barreau également rectangulaire de longueur sensiblement égale à la longueur du corps. Ces évidements sont appelés dans la suite de la description "logements".

Ces logements 22, ici au nombre de trois, sont disposés radialement les uns au-dessus des autres et à distance les uns des autres à partir du centre O de l'alésage 18.

Cette série de trois logements est répétée circonférentiellement autour du point O, selon quatre axes AA', BB', CC' et DD' décalés d'un angle de 45°, pour former une succession de séries régulièrement reparties autour du point O.

Ainsi comme illustré sur le figure 3, chaque demi-axe (OA, OA' ; OB, OB' ; OC, OC' ; OD, OD') porte trois logements axiaux 22 dont les faces de plus grande longueur sont perpendiculaires aux demi-axes et dont les dimensions de ces faces vont en diminuant du centre O vers la périphérie de la tôle.

Le logement 22 le plus proche de l'alésage 18 laisse subsister un pont de matière 24 avec cet alésage et un pont de matière 26 demeure entre chaque logement.

Le logement 22 le plus loin de l'alésage 18 est placé à distance du bord périphérique du corps.

L'autre série d'évidements consiste en des perforations 28, d'épaisseur "e" sensiblement constante et de direction radiale inclinée, qui partent des logements 22 pour arriver au voisinage du bord des tôles14. Ces perforations partent du bord latéral 30 des logements 22 et s'élèvent selon un angle α à partir d'un plan passant par l'une des faces de plus grande longueur des logements pour arriver à ce voisinage.

Tel que cela est représenté sur la figure 3, les perforations inclinées sont disposées symétriquement par rapport aux logements 22. Plus précisément, une série de trois perforations inclinées est placée d'un côté du demi-axe et un autre série de trois perforations inclinées est placée de l'autre côté de ce même demi-axe.

Ainsi, il se forme à chaque fois une figure géométrique sensiblement en forme de V à fond aplati avec le fond plat formé par le logement 22 et avec les bras inclinés de ce V formés par les perforations 28. On obtient alors, sur chaque demi-axe, trois formes en V superposées et à distance les unes des autres et de dimensions en hauteur et en largeur qui diminuent de l'alésage 18 vers la périphérie du corps.

Ainsi, outre les ponts de matière 24, 26, il subsiste une partie pleine 32 entre les perforations inclinées 28 de chaque forme en V, et une autre partie pleine 34 entre la perforation 28 la plus proche de l'alésage 18 d'une série de trois formes en V et la perforation 28 la plus proche de l'alésage 18 d'une autre série voisine de trois formes en V.

Par cela, il se crée des barrières de flux formées par les perforations 28. Le flux magnétique provenant des aimants ne peut alors que transiter par les ponts de matière et les parties pleines. On désignera comme formant une barrière de flux deux perforations 28 disposées de part et d'autre (de chaque côté du demi-axe) d'un aimant logé dans un logement 22 et partant des bords 30 dudit logement 22.

Chaque ensemble formé les trois générateurs de flux magnétique 16 logés dans les trois logements 22 alignés selon un demi-axe (OA, OA' ; OB, OB' ; OC, OC' ; OD, OD') et les trois perforations 28 de part et d'autre des aimants, soit six perforations 28 pour les trois aimants, constitue un pôle magnétique 20 du rotor, ici au nombre de 8. Dans le rotor de la machine selon l'invention, chaque pôle magnétique comprend au moins un aimant et au moins une barrière de flux magnétique.

Le nombre n de pôles magnétiques 20 du rotor, créés par les générateurs de flux 16 et les barrières de flux, est un nombre entier pair de préférence compris entre 2 et 12, et est de préférence égal à 4 ou 8, et de préférence égal à 8 tel qu'illustré à la figure 3. Le nombre de pôles dépend principalement du diamètre du rotor. Généralement, plus le nombre de pôles est important, plus le couple est important avec moins de courant, mais plus le pilotage du moteur est complexe car cela a un impact sur la fréquence électrique du moteur.

Le corps du rotor 150 peut en outre comprendre, dans le pont de matière 24 et au voisinage de l'alésage 18 de réception de l'arbre 160, des cavités 36, par exemple huit cavités en forme de quadrilatère tel qu'illustré à la figure 3, réparties de manière régulière autour du centre O, de préférence entre chaque demi-axe, pour alléger le rotor. Ces cavités 36 sont allongées selon l'axe X dans le rotor et le traversent de part en part (de l'avant à l'arrière de la machine). Des cavités de ce type, pouvant présenter une section fermée d'une autre forme telle que polygonale ou pentagonale, peuvent également servir de réception de masses d'équilibrage dynamique du rotor. Les masses d'équilibrage peuvent être par exemple des billes ou des barreaux de section circulaire. Les cavités 36 peuvent résulter d'un poinçonnage effectué sur chaque tôle et de l'assemblage des tôles les unes avec les autres en formant ainsi cette cavité.

En référence à la figure 2, mais également à la figure 7 montrant la partie tournante de la machine électrique cette fois munie des deux ventilateurs internes 181 et 182 selon une vue de profil, le premier ventilateur interne 181 est monté fixe sur l'arbre de rotation 160, entre le corps du rotor 150 et le palier 171 qui supporte l'arbre de rotation 160 du côté de l''entraînement de la charge 160a. Il est donc disposé côté avant du moteur, et fait face à la face interne 111 du flasque avant 110 du moteur. De manière symétrique, le ventilateur interne 182 est monté fixe sur l'arbre de rotation 160, entre le corps du rotor 150 et le palier 172 qui supporte l'arbre de rotation 160 du côté opposé au côté d'entraînement de la charge 160b. Il est donc disposé côté arrière du moteur, et fait face à la face interne 121 du flasque arrière 120. Les paliers 171, 172 sont par exemple à roulement à billes, tel que visible sur les figures 8A et 8B montrant la face avant de la partie tournante illustrée à la figure 7. Les ventilateurs internes 181 et 182 sont par exemple formés en aluminium et obtenus par moulage (« die casting » en anglais).

Les deux ventilateurs internes 181 et 182 ont une structure identique.

Pour créer la circulation d'air spécifique au sein de la carcasse, les ventilateurs internes 181, 182 ont la structure suivante: chaque ventilateur interne (181, 182) comporte :
- une face interne, telle que représentée aux figures 4B et 5B, orientée vers le corps du rotor 150,
- une face externe, telle que représentée aux figures 4A et 5A, orientée vers le flasque fermant la carcasse,
- une ouverture centrale 6 pour le passage de l'arbre de rotation 160, et
- une alternance de secteurs radiaux ouverts 2 et de secteurs radiaux fermés 3 divisant la surface du ventilateur et séparés par des parois radiales orthogonales à l'axe central (X), lesdites parois formant des lames saillantes 13 sur la face externe du ventilateur. Par secteurs radiaux fermés, on entend que les secteurs radiaux n'ont aucun orifice dans la direction axiale. Par secteurs radiaux ouverts, on entend que les secteurs radiaux ont au moins un orifice dans la direction axiale.

Les secteurs radiaux ouverts 2 comportent des ouvertures 2' dans la direction longitudinale, c'est-à-dire dans la direction axiale de l'arbre, et permettent l'entrée d'air dans les évidements 28 du rotor, et les secteurs radiaux fermés 3 comportent une surface, sans orifice, en forme de rampe (3, 3', 3") et permettent la sortie de l'air circulant dans les évidements 28 du rotor, selon un schéma de circulation décrit plus loin en relation avec les figures 9A et 9B.

La surface du ventilateur interne est plus précisément divisée en 2.n secteurs radiaux 1 régulièrement répartis angulairement, les 2.n secteurs radiaux se répartissant selon une alternance de secteurs radiaux ouverts 2 et de secteurs radiaux fermés 3. Le nombre de secteurs radiaux ouverts 2 est égal au nombre de secteurs radiaux fermés 3. L'angle β formé entre deux parois radiales délimitant chaque secteur radial 1 est égal à 360/(2.n). On rappelle que n est le nombre de pôles magnétiques 20 du rotor. De préférence, n est compris entre 2 et 12, préférentiellement égal à 4 ou 8, et plus préférentiellement est égal à 8. Ainsi, le ventilateur interne comprend 8 secteurs radiaux 1 lorsque le rotor comporte 4 pôles magnétiques, et 16 secteurs radiaux 1 dans le cas plus préféré où le rotor comporte 8 pôles magnétiques, ainsi qu'exemplifié dans les figures. Dans le cas où le rotor comporte 8 pôles magnétiques, les ventilateurs internes comportent chacun 16 secteur radiaux, avec un angle β égal à 22,5°.

Les ventilateurs internes ont de préférence une forme circulaire, leur face interne comportant une partie plane 4 orthogonale à l'axe central (X) et s'appuyant sur le corps du rotor 150, ladite partie plane orthogonale 4 s'étendant radialement depuis l'ouverture centrale 6 vers la périphérie du ventilateur, et se poursuivant soit par une partie plane inclinée 3', inclinée par rapport au plan de la partie plane 4, partant de la surface plane 6 et s'étendant vers la périphérie du ventilateur, au niveau des secteurs radiaux fermés 3. Cette partie 3' est ensuite poursuivie par une partie plane 3" orthogonale à l'axe X', et donc parallèle à la partie plane 4, soit par une ouverture 2' au niveau des secteurs radiaux ouverts 2, l'ouverture étant dans la direction axiale de l'arbre du rotor, ladite ouverture étant en partie délimitée par les parois latérales radiales 13. Par ouverture, on entend que cette partie peut comprendre au moins un orifice de passage. Les parties 4, 3' et 3" au niveau des secteurs radiaux fermés 3 créent une surface en forme de rampe permettant à l'air sortant des évidements 28 de glisser sur cette surface et d'être envoyé en direction du stator.

La partie plane 4 de la face interne des ventilateurs interne recouvre la partie du corps du rotor 150 comportant les cavités 36 au niveau de chaque secteur radial ouvert 2, afin de ne créer une circulation d'air que dans les barrières de flux formées par les évidements 28.

Les ventilateurs 181 et 182 peuvent comporter une bague 7 de fixation au corps du rotor 150 munie d'orifices 8 pour le passage de vis, pour éventuellement améliorer ou remplacer une fixation par mise en pression du ventilateur interne sur l'arbre de rotation 160. La bague 7 peut alors former l'ouverture centrale 6 du ventilateur interne. La bague 7 fait saillie sur la face externe des ventilateurs 181 et 182.

La face externe des ventilateurs internes comporte les lames saillantes axialement 13 formées par les parois radiales séparant les secteurs radiaux 1, qui permettent à la fois de diriger l'air dans les ouvertures 2' des secteurs radiaux ouverts 2 pour l'envoyer dans les évidements 28, et qui interviennent aussi dans la circulation de l'air réalisée entre chaque ventilateur interne et la face interne du flasque avant ou arrière, en envoyant l'air vers les têtes de bobines du stator. Les lames 13 prennent naissance à proximité de l'ouverture centrale 6, en bordure de la bague 7.

La face externe des ventilateurs internes comporte une partie plane 5 orthogonale à l'axe (X) entourant la bague 7 et portant les extrémités des lames saillantes 13. Au niveau d'un secteur radial ouvert 2, la partie plane 5 se prolonge vers la périphérie du ventilateur par une partie plane inclinée 5' formant un biseau avec la partie plane 4 de la face interne du ventilateur pour laisser place à l'ouverture 2'. Au niveau d'un secteur radial fermé 3, la partie plane 5 se prolonge vers la périphérie du ventilateur par une partie inclinée 9' qui est parallèle à la partie 3' de la face interne, elle-même poursuivie par une partie 9" parallèle à la partie 3" de la face interne.

Cette structure des secteurs radiaux fermés 3 et ouverts 2 est bien visible sur les figures 6B et 6C correspondant à des vues en coupe respectivement d'un secteur radial ouvert 2, selon la ligne A-A représentée à la figure 6A, et d'un secteur radial fermé 3, selon la ligne B-B représentée à a figure 6A. Les flèches sur les figures 6B et 6C représentent l'air entrant dans le rotor et en sortant. La figure 6A est une vue schématique de la face externe d'un ventilateur interne.

Chaque ventilateur interne est monté tel que deux secteurs radiaux fermé et ouvert adjacents recouvrent un pôle magnétique du rotor. Cette configuration est bien visible sur les figures 8A et 8B montrant la face avant de la partie rotative de la machine électrique munie du ventilateur 181. La figure 8B est identique à la figure 8A excepté que le ventilateur 181 est représenté en transparence pour une meilleure compréhension de la disposition des secteurs radiaux et fermés par rapport aux pôles magnétiques du rotor 150, comportant les aimants 16 entourés par les barrières de flux magnétique formées par les évidements 28. La figure 9A reprend la vue de la figure 8B, montrant la face avant de la partie rotorique munie du ventilateur 171, sur laquelle sont représentées des flèches blanches hachurées 2000 et des flèches noires pleines 3000 illustrant respectivement l'air interne entrant dans le rotor par les secteurs radiaux ouverts 2 et sortant du rotor par les secteurs radiaux fermés 3, lors de la rotation du rotor.

En outre, les deux ventilateurs internes 181, 182 sont montés décalés angulairement sur l'arbre de rotation d'un angle égal à β, soit égal à 360/(2.n). Ce décalage permet de faire correspondre un secteur ouvert 2 d'un ventilateur interne avec un secteur fermé 3 de l'autre ventilateur interne le long d'un même axe sensiblement parallèle à l'axe central (X), comme cela est illustré à la figure 7.

De cette manière, il est possible de créer un écoulement d'air à double sens au sein du rotor, tel qu'illustré à la figure 9B qui représente une vue en coupe de la machine électrique selon la section C-C' dessinée à la figure 9A : l'air interne entre d'un côté de la machine par l'ouverture 2' d'un secteur radial ouvert 2, tel qu'illustré avec les flèches 2000, circule dans les évidements 28 situés d'un même côté des aimants 16, tel qu'illustré par les flèches blanches pleines 5000, et ressort de l'autre côté de la machine par un secteur radial fermé disposé dans le prolongement axial du secteur radial ouvert 2, grâce au montage décalé des ventilateurs selon l'angle β. Le sens de circulation de l'air est par exemple de l'arrière vers l'avant de la machine tel qu'illustré dans la partie haute de la figure 9B. Dans le même temps, pour un même pôle magnétique du rotor, l'air interne entre dans le rotor, y circule et en sort selon le sens inverse, de l'avant à l'arrière de la machine, au niveau des évidements 28 situés de l'autre côté des mêmes aimants 16, selon le schéma de circulation représenté dans la partie basse de la figure 9B. Il se produit ainsi un écoulement d'air à double sens dans le rotor, un sens avant/arrière de la machine et un sens contraire arrière/avant de la machine, l'air circulant selon un sens dans les évidements axiaux 28 situés d'un côté des aimants et l'air circulant dans le sens opposé pour les évidements situés de l'autre côté des aimants, pour chaque pôle magnétique.

Par cet écoulement d'air à double sens au sein du rotor, les générateurs de flux 16 susceptibles de dégager de la chaleur sont efficacement refroidis, l'air circulant cédant lui-même de la chaleur aux flasques et à la carcasse via le deuxième écoulement d'air interne réalisé entre chaque ventilateur interne et la face interne du flasque avant ou arrière.

Ce deuxième écoulement d'air interne est mieux décrit ci-après.

Les flasques avant 110 et arrière 120 fermant de manière étanche la carcasse 130 interviennent dans la circulation de l'air interne et dans le refroidissement de la machine électrique.

Le flasque avant 110 est représenté aux figures 10A et 10B.

Le flasque avant 110 comporte une partie centrale en forme de couronne 118a et une partie périphérique de forme cylindrique 118b.

Le flasque avant 110 comporte une face interne 111 tournée vers l'intérieur de la carcasse 130, visible à la figure 10A, une face externe 112, visible à la figure 10B, et un logement central 116a, positionné dans la partie médiane de la face interne, destiné à recevoir le palier 171. Ce logement 116a comporte en son centre un orifice 116b prévu pour le passage de l'arbre de rotation 160 du rotor. Des joints d'étanchéité (114b, 114a) sont prévus au niveau de l'orifice 116b de passage de l'arbre 160 et sur le périmètre de la partie périphérique 118b destinée à venir en contact avec la carcasse 130. La partie périphérique 118b du flasque 110 comporte également des points de fixation 115, par exemple au nombre de quatre tel qu'illustré, pour fixer le flasque avant 110 à la carcasse 130.

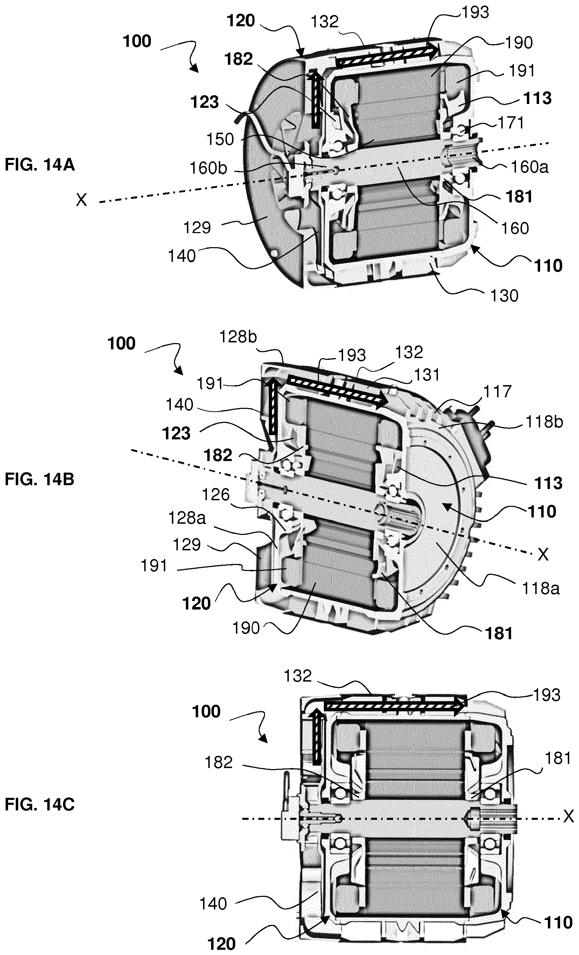

Selon l'invention, la face interne 111 du flasque avant 110 comporte un ensemble d'ailettes 113, agencées sur la périphérie du logement central 116a. Ces ailettes 113 ont pour fonction d'orienter le flux d'air créé par la rotation des ventilateurs internes (181, 182) et sortant du rotor 150, comme décrit plus bas en relation avec la figure 14, et de capter la chaleur de ce flux d'air. La face interne 111 du flasque avant 110 comporte par exemple douze ailettes 113.

Les ailettes 113 sont de préférence réparties régulièrement autour du logement 116a. De préférence, les ailettes et le corps du flasque forme une seule entité (monobloc), par exemple issu d'une fabrication à l'aide d'un moule. Avantageusement, les ailettes ont une forme telle qu'elles contribuent à une circulation de l'air interne spécifique qui refroidit efficacement les têtes de bobines et la partie tournante de la machine. Chaque ailette est de préférence plane, et a une forme générale de trapèze dont les bases (côtés opposés parallèles) sont orthogonales à l'axe (X), et dont le côté opposé au logement 116a n'est pas droit mais courbe, présentant une concavité (par rapport à un point situé à la périphérie 118b du flasque dans le prolongement radial de l'ailette). Cette concavité du bord de l'ailette permet d'assurer une proximité optimale avec les têtes de bobines tout en assurant un écoulement d'air optimisé pour un refroidissement efficace. Cette description des ailettes est faite sur la base des parties visibles à la surface du flasque (et non sur la base d'une coupe du flasque). Selon une coupe longitudinale passant par l'ailette, cette dernière présente une forme générale de trapèze rectangle dont le côté formant un angle droit avec les bases constitue la paroi du logement 116 (visible sur la figure 14). Les ailettes internes ont en quelque sorte une forme d'aile d'oiseau dont la partie scapulaire serait en regard de la face interne du flasque. Les dimensions des ailettes sont telles qu'un espace maximum est laissé entre le ventilateur interne et la partie sommitale des ailettes 113a en regard du ventilateur interne, de manière à conserver une proximité avec le ventilateur interne adaptée à une bonne circulation de l'air dans l'espace libre laissé entre le flasque et les éléments internes de la machine. A titre d'exemple nullement limitatif, un espace de 4 à 5 mm est laissé entre le ventilateur interne et le sommet 113a des ailettes, pour un dispositif comportant des flasques de diamètre interne d'environ 20 cm munis d'ailettes internes d'environ 20 mm de long, la longueur des ailettes (ou encore hauteur) étant entendue comme la dimension des ailettes selon l'axe (X).

De préférence, la partie périphérique 118b du flasque avant 110 comporte en outre des ailettes dissipatives de la chaleur 117 sur sa face externe 112. Les ailettes dissipatives 117 sont allongées sensiblement selon un axe parallèle à l'axe (X) du rotor. Lorsque la carcasse 130 a une surface externe comportant un ensemble d'ailettes de refroidissement 131, tel que détaillé à la figure 13, les ailettes 117 du flasque avant 110 prolongent alors les passages formés par les ailettes de refroidissement 131 de la carcasse 130.

Le flasque arrière 120 est représenté aux figures 11A et 11B.

Le flasque arrière 120 comporte une partie centrale en forme de couronne 128a reliée à une partie périphérique cylindrique 128b.

Comme pour le flasque avant 110, le flasque arrière 120 comporte une face interne 121 tournée vers l'intérieur de la carcasse 130, visible à la figure 11A, une face externe 122, visible à la figure 11B, et un logement central 126a, positionné dans la partie médiane de la face interne, destiné à recevoir le palier 172. Ce logement 126a comporte en son centre un orifice 126b prévu pour le passage de l'arbre de rotation 160. Des joints d'étanchéité (124b, 124a) sont prévus au niveau de l'orifice 126b de passage de l'arbre 160 et sur le périmètre de la partie centrale 128b destinée à venir en contact avec la carcasse 130. La partie périphérique 128b et la partie centrale 128a du flasque arrière 120 comportent des liaisons 125 qui comprennent également les points de fixation du flasque à la carcasse. Par exemple, le flasque arrière comporte quatre liaisons 125 avec quatre points de fixation (orifices pour passage de vis par exemple).

Selon l'invention, la face interne 121 du flasque arrière 120 comporte, de la même manière que pour le flasque avant 110, un ensemble d'ailettes 123, agencées à la périphérie du logement 126a du palier. Ces ailettes 123 ont la même fonction d'orientation du flux d'air créé par la rotation des ventilateurs internes et sortant du rotor 150, comme décrit plus bas en relation avec la figure 14, et de captage de la chaleur de ce flux d'air. La face interne 121 du flasque arrière 120 comporte par exemple douze ailettes 123.

Les ailettes 123 sont de préférence réparties régulièrement autour du logement 126a. Leur forme et leurs dimensions sont de préférence identiques à celles des ailettes 113 de la face interne 111 du flasque avant 110, décrites plus haut. Comme pour les ailettes 113, les dimensions des ailettes 123 sont telles qu'un espace maximum est laissé entre le ventilateur interne et la partie sommitale des ailettes 123a en regard du ventilateur interne 182.

Le flasque arrière 120 comporte au moins une ouverture 127 disposée entre la partie centrale 128a et la partie périphérique 128b pour diriger l'air extérieur envoyé par le ventilateur externe 140 le long de la carcasse 130, notamment pour diriger cet air dans des passages formés par l'ensemble des ailettes de refroidissement 131 de la surface externe de la carcasse 130. Le flasque arrière 120 comporte par exemple quatre ouvertures de ce type, tel qu'illustré aux figures 11A et 11B. Ces ouvertures 207 ont par exemple une forme d'arc de cercle, et sont réparties uniformément sur le périmètre de la partie centrale 128a du flasque 120.

La figure 12 est une vue en coupe du moteur 100 selon le premier mode de réalisation de l'invention, détaillant les éléments de la machine et illustrant l'écoulement d'air entre chaque ventilateur interne et la face interne du flasque avant ou arrière à l'intérieur de la carcasse étanche (flux d'air 192 représenté par les flèches) provoquée par l'interaction entre les ventilateurs internes 181 et 182 en fonctionnement et les éléments structuraux de la machine au sein de la carcasse 130, notamment la structure des faces internes des flasques 110 et 120.

Le moteur 100 comprend le stator 190, disposé dans la carcasse 130, comportant des bobines et dans lequel est monté mobile en rotation le rotor 150 fixé à l'arbre de rotation 160. Le système de refroidissement du moteur comporte d'une part la paire de ventilateurs internes 181 et 182, en interaction avec les ailettes des flasques, et d'autre part des moyens de refroidissement externe, i.e. le ventilateur externe 140 selon le premier mode de réalisation, pour refroidir la carcasse et les flasques avant et arrière.

En plus de créer un écoulement d'air à double sens au sein du rotor, les ventilateurs internes 181 et 182, lors de la rotation du rotor, interagissent avec les ailettes 113 et 123 des faces internes 111 et 121 des flasques avant et arrière (110, 120) pour créer un écoulement d'air entre chaque ventilateur interne et la face interne d'un flasque, dont la chaleur est captée par les ailettes des faces internes des flasques.

Plus spécifiquement, les ailettes (113, 123) de la face interne (111, 121) des flasques avant et arrière (110, 120) sont aptes à diriger le flux d'air 192 sortant du rotor de manière radiale vers les têtes 191 des bobines du stator 190 (écoulement selon une direction qui est centrifuge autour de l'axe (X) de l'arbre de rotation 160), puis à retourner le flux d'air depuis les têtes 191 de bobines vers le centre du flasque, d'abord selon une direction parallèle à l'axe (X) au niveau des têtes de bobines, puis radialement vers l'arbre de rotation (écoulement parallèle à l'axe (X) puis selon une direction centripète autour de l'axe (X)). Un tel écoulement d'air est ainsi réalisé côté avant et côté arrière du moteur, de part et d'autre du rotor 150. Les ailettes des faces internes des flasques 113 et 123, en plus d'orienter le flux d'air interne sortant du rotor, permettent de dissiper la chaleur du flux d'air et donc de refroidir les têtes 191 de bobines, ainsi que l'arbre 160 et le rotor 150 de la machine électrique.

La chaleur de l'air interne est en partie évacuée par contact avec les flasques et la carcasse de la machine électrique.

Le ventilateur 140, positionné sur la face externe du flasque arrière 120, contribue au refroidissement de la carcasse 130 et des flasques par la génération d'un flux d'air externe, qui est d'abord dirigé radialement vers la périphérie de la face externe du flasque arrière 120, puis qui est dirigé vers le flasque avant 110 parallèlement à l'axe de rotation (X), de manière à balayer la surface extérieure de la carcasse 130 munie préférentiellement des ailettes de refroidissement 131, et de préférence surmontée des plaques métalliques 132 qui confinent le flux d'air à la surface extérieure de la carcasse 130.

La figure 13 correspond à une vue « du dessus » du moteur selon le premier mode de réalisation de l'invention, montrant plus en détails l'extérieur de la carcasse, notamment la partie latérale du moteur. La carcasse 130, typiquement en métal, par exemple en fer ou aluminium, peut avoir à sa surface externe un ensemble d'ailettes de refroidissement 131, allongées selon un axe sensiblement parallèle à l'axe du rotor (X). Par sensiblement parallèle à l'axe (X), on entend à plus ou moins 25° degrés près par rapport à cet axe (X). Ces ailettes de refroidissement 131 ont pour rôle d'augmenter la surface d'échange de la carcasse avec l'air pour une dissipation plus grande de la chaleur, et de diriger le flux d'air externe à la surface de la carcasse de manière à couvrir toute la longueur de la carcasse d'un flasque à un autre. Une continuité de passage du flux d'air externe est créée lorsque la partie périphérique du flasque avant 110 comporte également des ailettes de dissipation 117, de préférence orientées dans le même sens que les ailettes de refroidissement de la carcasse 130, améliorant ainsi le refroidissement de la carcasse et du flasque avant.

Avantageusement, le moteur électrique comporte en outre des plaques métalliques 132, de préférence en aluminium, montées sur la carcasse 130 et entourant les ailettes de refroidissement 131, pour maintenir l'air à proximité de la surface externe de la carcasse 130 et des ailettes de refroidissement 131 lors de sa circulation le long de la carcasse. Dans l'exemple de moteur représenté à la figure 13, les plaques métalliques 132 sont légèrement incurvées de manière à suivre la forme de la surface extérieure de la carcasse. Sur la figure 13, les plaques métalliques 132 sont représentées avec une transparence afin de laisser apparaître la structure qu'elles surmontent. Il en est de même pour le flasque arrière 120, laissant apercevoir en transparence le ventilateur externe 140. Les plaques métalliques 132 sont de préférence réparties régulièrement autour de la carcasse, par exemple huit plaques sont fixées sur la carcasse, regroupées deux par deux pour former des unités espacées autour de la carcasse.

Les plaques métalliques 132 sont montées sur la carcasse de manière à laisser un passage pour la circulation de l'air extérieur envoyé par le ventilateur externe 140. Ainsi, tel que cela est bien visible sur la figure 14A décrite plus loin, les plaques métalliques 132 peuvent s'appuyer sur la partie périphérique du flasque arrière 120.

L'air externe passe de préférence dans les passages formés entre les ailettes de refroidissement 131 allongées sensiblement selon l'axe (X), en étant confiné à l'espace formé entre les plaques métalliques et la surface extérieure de la carcasse 130. Avantageusement, les ouvertures 127 du flasque arrière 120 permettent le passage de l'air extérieur envoyé par le ventilateur 140 de la face externe du flasque vers la surface extérieure de la carcasse 130 munie préférentiellement des ailettes de refroidissement 131.

Le flux d'air externe est représenté par des flèches 193 dans les figures 14A, 14B et 14C, qui montrent le moteur selon le premier mode de réalisation respectivement selon une vue arrière, une vue avant et une coupe longitudinale.

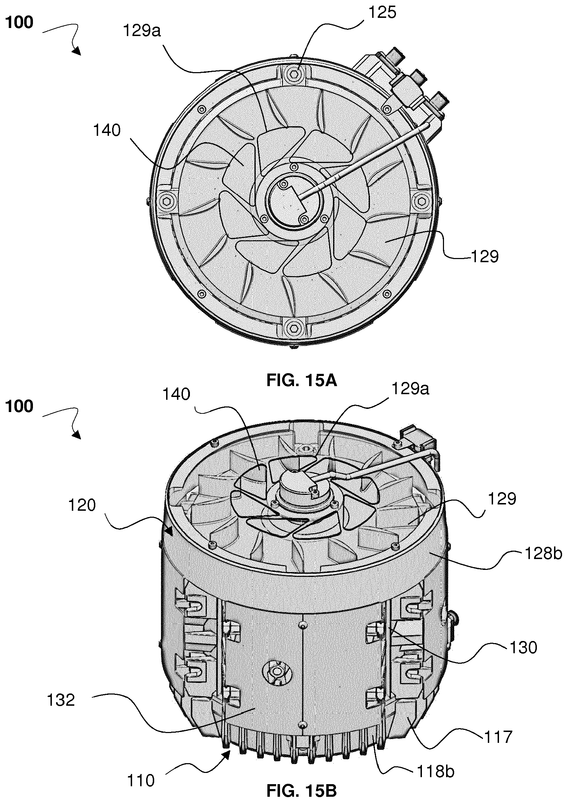

Le ventilateur externe 140 est bien visible sur les figures 15A et 15B, qui sont respectivement une vue en plan de la face arrière et une vue en perspective de cette même face arrière du moteur selon le premier mode de réalisation.

Le ventilateur externe 140 comporte une roue d'entrainement de l'air extérieur fixée à l'arbre de rotation 160 et une plaque de protection 129 fixée à la partie périphérique 128b du flasque arrière 120. La plaque de protection 129 comporte des orifices 129a pour l'entrée de l'air extérieur qui est aspiré par la roue d'entrainement du ventilateur 140. Le ventilateur externe 140 est de dimension plus importante que celle des ventilateurs internes 181 et 182. La dimension du ventilateur 140 est choisie en fonction de la puissance du moteur et de la vitesse de rotation maximale, de manière à assurer un refroidissement optimal. La roue d'entrainement peut être une surface plane munie d'ailettes de ventilation, par exemple au nombre de 13 tel que représenté sur les figures 15a et 15B, régulièrement réparties autour de l'axe central (X).

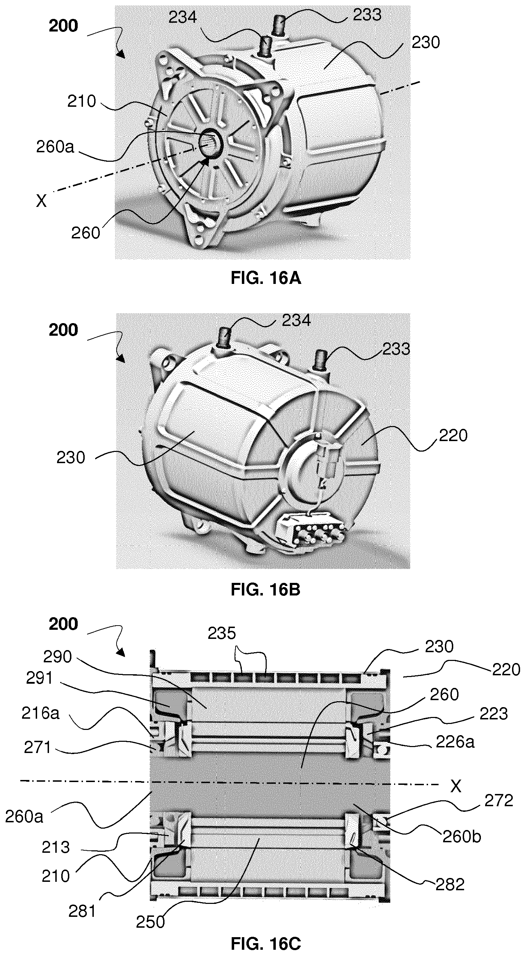

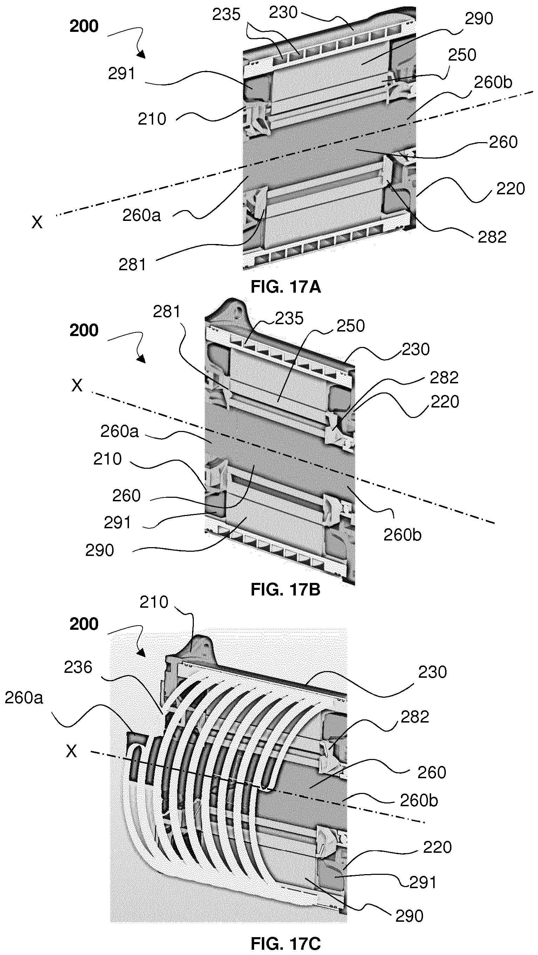

Selon un second mode de réalisation, illustré aux figures 16A, 16B, 16C et 17A, 17B, 17C, la machine selon l'invention comporte un dispositif de refroidissement par liquide de la carcasse du moteur.

De manière analogue au moteur selon le premier mode de réalisation de l'invention, le moteur 200 comporte :
- un stator 290 disposé dans une carcasse 230, ledit stator 290 comportant des bobines ;
- un rotor 250 comportant un corps fixé à un arbre de rotation 260 tournant autour d'un axe central (X), le rotor 250 étant monté rotatif dans le stator et comprenant des logements 22 logeant des générateurs de flux magnétique 16 et des évidements 28 formant des barrières de flux, les logements 22 et les évidements 28 étant allongés et traversant ledit corps de rotor selon l'axe (X) ;
- une paire de paliers (271, 272) supportant chacun une extrémité de l'arbre de rotation : un côté d'entraînement d'une charge 260a de l'arbre de rotation 260 et un côté opposé au côté d'entraînement 260b de la charge de l'arbre de rotation 260 ;
- un flasque avant 210 disposé à une première extrémité de la carcasse 230 et supportant le côté d'entrainement 260a de la charge de l'arbre de rotation 260 ;
- un flasque arrière 220 disposé à une deuxième extrémité de la carcasse 230 opposée à la première extrémité, et supportant le côté opposé au côté d'entraînement 260b de la charge de l'arbre de rotation 260 ;
   les flasques avant et arrière comportant des moyens d'étanchéité pour fermer de manière étanche la carcasse 230, et comportant chacun une face interne, une face externe, et un logement (216a, 226a) positionné dans une partie médiane de la face interne pour recevoir un desdits paliers ; et
- un système de refroidissement comportant une paire de ventilateurs internes (281, 282) disposés à l'intérieur de la carcasse pour créer un flux d'air à l'intérieur de la carcasse lors de la rotation du rotor, chaque ventilateur étant monté fixe sur l'arbre de rotation entre le corps du rotor et un palier ;
   la face interne des flasques comportant des ailettes (213, 223) agencées sur une partie périphérique du logement du palier pour orienter l'air interne sortant du rotor et en capter la chaleur.

Selon ce deuxième mode de réalisation, le refroidissement de l'intérieur de la machine est identique à celui décrit en relation avec le premier mode de réalisation de l'invention, c'est-à-dire une paire de ventilateurs internes, chaque ventilateur interne étant monté fixe sur l'arbre de rotation 260 entre le corps du rotor 150 et un desdits paliers, permettant de créer, lors de la rotation de l'arbre, un premier écoulement d'air à double sens dans les évidements 28 du rotor et un deuxième écoulement d'air entre chaque ventilateur interne et la face interne du flasque avant ou arrière avec une interaction entre les ventilateurs internes (281, 282) et les ailettes (213, 223) des faces internes des flasques avant et arrière.

Selon ce deuxième mode de réalisation, les moyens de refroidissement externe pour refroidir la carcasse et les flasques avant et arrière comportent un circuit de liquide de refroidissement. Ce circuit comprend une entrée 233 du liquide de refroidissement, une sortie 234 du liquide de refroidissement, et un réseau de conduits 235 en contact avec la carcasse 230, dans lequel un liquide de refroidissement, tel que de l'eau, ou tout autre liquide apte à refroidir la machine, circule pour refroidir la carcasse 230 et les flasques avant 210 et arrière 220.

Avantageusement, le réseau de conduits est un serpentin 236 intégré dans la carcasse 230, tel que cela est mieux visible sur la figure 17C, où la circulation de l'eau dans le serpentin est représentée, les ouvertures 235 correspondant au serpentin vu en coupe dans les autres figures 16C, 17A et 17B.

Dans l'exemple de moteur 200 représenté aux figures 16A à 16C et 17A à 17B, le moteur est fermé, c'est-à-dire que le moteur comprend un boîtier étanche formé par la carcasse 230 et les flasques avant 210 et arrière 220. Les flasques ferment de manière étanche la carcasse. Plus spécifiquement, le flasque avant 210 et une partie de la carcasse 230 forme une même pièce, et le flasque arrière 220 et une partie de la carcasse 230 forment une deuxième pièce unitaire, la réunion des deux pièces formant le boîtier étanche, et permettant l'intégration du serpentin dans la carcasse 230.

Le circuit de refroidissement liquide permet de refroidir toute la carcasse 230 du moteur 200, y compris les flasques 210 et 220, par échange de chaleur entre ces éléments et le liquide de refroidissement.

La présente invention s'applique avantageusement aux moteurs à réluctance synchrone variable, et de préférence aux machines ayant une puissance comprise entre 20 kW et 400 kW. A titre d'exemple non limitatif, le moteur refroidi selon l'invention peut être un moteur à réluctance synchrone variable d'une puissance continue de 30 kW, de puissance transitoire (Peak) 52 kW, pouvant fonctionner avec une tension d'alimentation du bus DC de 350 V, et pouvant présenter les dimensions suivantes : diamètre extérieur du rotor 134 mm, diamètre extérieur du stator de 200 mm, diamètre extérieur de la carcasse de 250 mm, longueur du moteur de 214 mm, longueur de la partie active (correspondant à la longueur de l'empilement des tôles du rotor) de 100 mm.

## Revendications

1. Machine électrique tournante fermée (100, 200) comportant :
- un stator (190, 290) disposé dans une carcasse (130, 230) et comportant des bobines;
- un rotor (150, 250) comprenant un corps fixé à un arbre de rotation (160, 260) tournant autour d'un axe central (X), ledit rotor étant monté rotatif dans le stator et comprenant des premiers évidements (22) logeant des générateurs de flux magnétique (16) et des deuxièmes évidements (28) formant des barrières de flux magnétiques, lesdits premiers et deuxièmes évidements étant allongés et traversant ledit corps de rotor selon l'axe (X) ;
- une paire de paliers (171, 172, 271, 272) supportant chacun une extrémité de l'arbre de rotation ;
- un flasque avant et un flasque arrière disposés respectivement à deux extrémités opposées avant et arrière de la carcasse, lesdits flasques avant et arrière comportant chacun des moyens d'étanchéité (114a, 114b, 124a, 124b) pour fermer de manière étanche ladite carcasse, une face interne (111, 121), une face externe (112, 122), et un logement central (116a, 126a, 216a, 226a) pour recevoir un desdits paliers, ladite face interne des flasques comportant des ailettes (113, 123, 213, 223) agencées sur une partie périphérique du logement central (116a, 126a, 216a, 226a), et
- un système de refroidissement comportant une paire de ventilateurs internes (181, 182, 281, 282), chaque ventilateur interne étant monté fixe sur l'arbre de rotation (160, 260) entre le corps du rotor (150, 250) et un desdits paliers (171, 172, 271, 272), pour créer lors de la rotation de l'arbre un premier écoulement d'air à double sens dans les deuxièmes évidements (28) du rotor et un deuxième écoulement d'air entre chaque ventilateur interne (181, 182, 281, 282) et la face interne (111, 121) du flasque avant ou arrière, dans laquelle chaque ventilateur interne (181, 182, 281, 282) comporte une face interne, une face externe, une ouverture centrale (6) pour la passage de l'arbre de rotation (160, 260), et une alternance de secteurs radiaux ouverts (2) et de secteurs radiaux fermés (3), divisant la surface du ventilateur interne et séparés par des parois radiales orthogonales à l'axe (X) (13) formant des lames saillantes sur la face externe du ventilateur interne, les secteurs radiaux ouverts (2) comportant des ouvertures (2') et permettant l'entrée d'air dans les évidements (28) du rotor, et les secteurs radiaux fermés (3) comportant une surface en forme de rampe (3, 3', 3") et permettant la sortie de l'air circulant dans les évidements (28) du rotor.

2. Machine électrique selon la revendication 1, dans laquelle chaque ventilateur interne (181, 182, 281, 282) a une forme circulaire, avec une face interne comportant une partie plane (4) s'étendant radialement depuis l'ouverture centrale (6) vers la périphérie du ventilateur et orthogonale à l'axe central (X), ladite partie plane (4) se prolongeant par une partie plane inclinée (3') au niveau de chaque secteur radial fermé (3) et par l'ouverture (2') au niveau de chaque secteur radial ouvert (2), ladite ouverture (2') étant en partie délimitée par les parois latérales radiales (13).

3. Machine électrique selon l'une quelconque des revendications 2 à 3, dans laquelle :
- le rotor comporte n pôles magnétiques (20) crées par les générateurs de flux (16) et les barrières de flux,
- chaque pôle magnétique (20) est recouvert par deux secteurs radiaux fermé (3) et ouvert (2) adjacents d'un ventilateur interne, et
- les deux ventilateurs internes sont montés décalés sur l'arbre (160, 260) de rotation de manière à faire correspondre un secteur radial ouvert (2) d'un ventilateur interne avec un secteur radial fermé (3) de l'autre ventilateur interne le long d'un même axe sensiblement parallèle à l'axe central (X).

4. Machine électrique selon la revendication 4, dans laquelle :
- l'ensemble des secteurs radiaux ouverts (2) et fermés (3) d'un ventilateur interne est égal à 2.n, et
- les deux ventilateurs internes sont montés décalés angulairement sur l'arbre de rotation (160, 260) d'un angle β égal à 360/(2.n),
n étant un entier pair compris entre 2 et 12, et de préférence égal à 4 ou 8.

5. Machine électrique selon l'une des revendications précédentes, dans laquelle les ventilateurs internes (181, 182, 281, 282) et les ailettes (113, 123, 213, 223) de la face interne (111, 121) des flasques (110, 120) sont aptes à diriger l'air de manière radiale vers les têtes (191, 291) des bobines du stator (190, 290), puis à retourner ledit flux d'air depuis les têtes (191, 291) de bobines vers le centre des flasques d'abord selon une direction parallèle à l'axe (X) au niveau des têtes (191, 291) des bobines, puis radialement vers l'arbre de rotation (160, 260), pour former le deuxième écoulement d'air créé entre chaque ventilateur interne et la face interne du flasque avant ou arrière.

6. Machine électrique selon l'une quelconque des revendications précédentes, dans laquelle les ailettes (113, 123, 213, 223) de la face interne des flasques sont planes et ont une forme générale de trapèze comportant des bases orthogonales à l'axe central (X) et un côté opposé au logement (116a, 126a, 216a, 226a) présentant une concavité.

7. Machine électrique selon l'une quelconque des revendications précédentes, comportant en outre des moyens de refroidissement externe pour refroidir la carcasse et les flasques avant et arrière.

8. Machine électrique selon la revendication 7, dans laquelle les moyens de refroidissement externe comprennent un ventilateur externe (140) disposé en regard de la face externe (122) du flasque arrière (120) et monté fixe sur l'arbre de rotation (160), pour envoyer de l'air extérieur le long de la carcasse (130) en direction du flasque avant (110).

9. Machine électrique selon la revendication 8, dans laquelle
- la carcasse (130) a une surface externe comportant un ensemble d'ailettes de refroidissement (131) allongées sensiblement selon un axe parallèle à l'axe (X) de l'arbre de rotation (160) ;
- le flasque arrière (120) comporte une partie centrale (128a) en forme de couronne reliée à une partie périphérique cylindrique (128b), et au moins une ouverture (127) disposée entre ladite partie centrale (128a) et ladite partie périphérique (128b) du flasque arrière (120) pour diriger l'air extérieur envoyé par le ventilateur externe (140) dans des passages formés par l'ensemble des ailettes de refroidissement (131) de la surface externe de la carcasse (130).

10. Machine électrique selon la revendication 9, dans laquelle le ventilateur externe (140) comporte une roue d'entrainement de l'air extérieur fixée à l'arbre de rotation (160) et une plaque de protection (129) comportant des orifices (129a) pour l'entrée de l'air extérieur, ladite plaque étant fixée à la partie périphérique (128b) du flasque arrière (120).

11. Machine électrique selon la revendication 7, dans laquelle les moyens de refroidissement externe comportent un circuit de liquide de refroidissement comprenant une entrée (233) du liquide de refroidissement, une sortie (234) du liquide de refroidissement, et un réseau de conduits (235) en contact avec la carcasse (230), dans lequel le liquide de refroidissement circule pour refroidir la carcasse (230) et les flasques avant (210) et arrière (220), et dans laquelle ledit réseau de conduits (235) est de préférence un serpentin (236) intégré dans la carcasse (230).

12. Machine électrique selon la revendication 11, dans laquelle le liquide de refroidissement comporte de l'eau.

13. Machine électrique selon l'une des revendications précédentes, à réluctance synchrone variable.

## Patentansprüche

1. Geschlossene rotierende elektrische Maschine (100, 200), umfassend:
- einen Stator (190, 290), der in einem Rahmen (130, 230) angeordnet ist und Spulen umfasst;
- einen Rotor (150, 250) mit einem Körper, der an einer Drehwelle (160, 260) befestigt ist, die sich um eine Mittelachse (X) dreht, wobei der Rotor drehbar im Stator montiert ist und ein Gehäuse mit ersten Aussparungen (22) aufweist Magnetflussgeneratoren (16) und zweite Aussparungen (28), die Magnetflussbarrieren bilden, wobei die erste und die zweite Aussparung länglich sind und entlang der Achse (X) durch den Rotorkörper verlaufen;
- ein Paar Lager (171, 172, 271, 272), die jeweils ein Ende der Rotationswelle tragen;
- ein vorderer Flansch und ein hinterer Flansch, die jeweils an zwei gegenüberliegenden Enden vor und hinter der Karkasse angeordnet sind, wobei der vordere und hintere Flansch jeweils Dichtungsmittel (114a, 114b, 124a, 124b) zum Abdichten des besagten besagen Karkasse, eine Innenfläche (111, 121), eine Außenfläche (112, 122) und ein zentrales Gehäuse (116a, 126a, 216a, 226a) zur Aufnahme eines der Lager, wobei die Innenfläche der Flansche umfasst Rippen (113, 123, 213, 223), die an einem peripheren Teil des zentralen Gehäuses (116a, 126a, 216a, 226a) angeordnet sind, und
- ein Kühlsystem mit einem Paar inner Lüfter (181, 182, 281, 282), wobei jeder interne Lüfter fest auf der Rotationswelle (160, 260) zwischen dem Rotorkörper (150, 250) und a montiert ist wobei die Lager (171, 172, 271, 272) beim Drehen der Welle einen ersten Zweiwege-Luftstrom in den zweiten Aussparungen (28) des Rotors und einen zweiten Luftstrom zwischen jedem inner Lüfter (181, 182, 281, 282) erzeugen und Innenfläche (111, 121) des vorderen oder hinteren Flansches, bei der jeder Innenlüfter (181, 182, 281, 282) eine Innenfläche, eine Außenfläche, eine zentrale Öffnung (6) für den Durchgang der Drehwelle (160, 260) aufweist und ein Wechsel von offenen radialen Sektoren (2) und geschlossenen radialen Sektoren (3), die die Oberfläche des inneren Lüfters teilen und durch radiale Wände senkrecht zur Achse (X) (13) getrennt sind und auf der Außenseite vorstehende Schaufeln bilden interner Lüfter, die offenen radialen Sektoren (2) umfassen Öffnungen (2') und lassen Luft in die Aussparungen (28) des Rotors eintreten, und die geschlossenen radialen Sektoren (3) umfassen eine rampenförmige Oberfläche (3, 3', 3") und Ermöglichen des Austritts von Luft, die in den Aussparungen (28) des Rotors zirkuliert.

2. Elektrische Maschine nach Anspruch 2, wobei jeder innere Lüfter (181, 182, 281, 282) eine kreisförmige Form aufweist, wobei eine innere Fläche einen flachen Teil (4) umfasst, der sich radial von der zentralen Öffnung (6) zum Umfang des Lüfters und orthogonal zu dem erstreckt Mittelachse (X), wobei der flache Teil (4) durch einen geneigten flachen Teil (3') in Höhe jedes geschlossenen radialen Sektors (3) und durch die Öffnung (2') in Höhe jedes offenen radialen Sektors verlängert wird (2), wobei die Öffnung (2') teilweise durch die radialen Wände (13) begrenzt ist.

3. Elektrische Maschine nach einem der Ansprüche 2 bis 3, bei der:
- Der Rotor hat n Magnetpole (20), die von den Flussgeneratoren (16) und den Flussbarrieren erzeugt werden.
- Jeder Magnetpol (20) wird von zwei geschlossenen (3) und offenen (2) Radialsektoren neben einem internen Lüfter abgedeckt
- Die beiden Innenlüfter sind versetzt auf der rotierenden Welle (160, 260) montiert, um einen offenen Radialsektor (2) eines Innenlüfters mit einem geschlossenen Radialsektor (3) des anderen Innenlüfters abzugleichen entlang derselben Achse im wesentlichen parallel zur Mittelachse (X).

4. Elektrische Maschine nach Anspruch 5, wobei:
- Der Satz offener (2) und geschlossener (3) radialer Sektoren eines internen Lüfters ist gleich 2.n und
- Die beiden internen Lüfter sind winkelversetzt auf der Drehwelle (160, 260) um einen Winkel β von 360/(2.n) montiert.
n ist eine gerade ganze Zahl zwischen 2 und 12 und vorzugsweise gleich 4 oder 8.

5. Elektrische Maschine nach einem der vorhergehenden Ansprüche, wobei die Innenlüfter (181, 182, 281, 282) und die Rippen (113, 123, 213, 223) der Innenfläche (111, 121) der Flansche (110, 120) können die Luft radial zu den Köpfen (191, 291) der Spulen des Stators (190, 290) lenken und dann den Luftstrom von den Köpfen (191, 291) zurückführen. von Spulen in Richtung der Mitte der Flansche zuerst in einer Richtung parallel zur Achse (X) in Höhe der Köpfe (191, 291) der Spulen, dann radial in Richtung der Rotationswelle (160, 260), um die zu bilden Zweiter Luftstrom zwischen jedem internen Lüfter und der Innenfläche des vorderen oder hinteren Flansches.

6. Elektrische Maschine nach einem der vorhergehenden Ansprüche, bei der die Rippen (113, 123, 213, 223) der Innenfläche der Flansche flach sind und die allgemeine Form eines Trapezes aufweisen, das zur Mittelachse orthogonale Basen aufweist (X) und eine dem Gehäuse gegenüberliegende Seite (116a, 126a, 216a, 226a) mit einer Konkavität.

7. Elektrische Maschine nach einem der vorhergehenden Ansprüche, ferner umfassend externe Kühlmittel zum Kühlen der Karkasse und der vorderen und hinteren Flansche.

8. Elektrische Maschine nach Anspruch 7, bei der das externe Kühlmittel einen externen Lüfter (140) umfasst, der gegenüber der Außenseite (122) des hinteren Flansches (120) angeordnet und fest auf der Drehwelle (160) montiert ist; Außenluft entlang der Karkasse (130) in Richtung des vorderen Flansches (1 10) zu senden.

9. Elektrische Maschine nach Anspruch 8, wobei
- die Karkasse (130) hat eine Außenfläche, die einen Satz Kühlrippen (131) umfasst, die im wesentlichen entlang einer Achse parallel zur Achse (X) der Rotationswelle (160) verlängert sind;
- der hintere Flansch (120) umfasst einen Mittelteil (128a) in Form einer Krone, die mit einem zylindrischen Umfangsteil (128b) verbunden ist, und mindestens eine Öffnung (127), die zwischen dem Mittelteil (128a) und dem Umfangsteil (128b) angeordnet ist.) des hinteren Flansches (120), um die vom Außenlüfter (140) gesendete Außenluft in Durchgänge zu leiten, die durch den Satz von Kühlrippen (131) der Außenfläche der Karkasse (130) gebildet werden.

10. Elektrische Maschine nach Anspruch 9, wobei der externe Lüfter (140) ein externes Luftantriebsrad aufweist, das an der Rotationswelle (160) angebracht ist, und eine Abdeckplatte (129) mit Öffnungen (129a) für den Eintritt von Außenluft ist die Platte am Umfangsteil (128b) des hinteren Flansches (120) befestigt.

11. Elektrische Maschine nach Anspruch 7, wobei die externe Kühleinrichtung einen Kühlflüssigkeitskreislauf umfasst, der einen Einlass (233) für die Kühlflüssigkeit, einen Auslass (234) für die Kühlflüssigkeit und ein Netzwerk von Leitungen (235) umfasst. in Kontakt mit dem Gehäuse (230), wobei das Kühlmittel zirkuliert, um das Gehäuse (230) und die vorderen (210) und hinteren (220) Flansche zu kühlen, und wobei das Netzwerk von Kanälen (235) vorzugsweise a ist Spule (236) in den Rahmen (230) integriert.

12. Elektrische Maschine nach Anspruch 11, wobei die Kühlflüssigkeit Wasser umfasst.

13. Elektrische Maschine nach einem der vorhergehenden Ansprüche mit variabler synchroner Reluktanz.

## Claims

1. Closed rotating electric machine (100, 200) comprising:
- a stator (190, 290) arranged in a frame (130, 230) and comprising coils;
- a rotor (150, 250) comprising a body fixed to a rotation shaft (160, 260) rotating around a central axis (X), said rotor being rotatably mounted in the stator and comprising first recesses (22) housing magnetic flux generators (16) and second recesses (28) forming magnetic flux barriers, said first and second recesses being elongated and passing through said rotor body along the axis (X);
- a pair of bearings (171, 172, 271, 272) each supporting one end of the rotation shaft;
- a front flange and a rear flange disposed respectively at two opposite ends, front and rear of the carcass, said front and rear flanges each comprising sealing means (1 14a, 1 14b, 124a, 124b) for sealingly closing said carcass, an internal face (1 1 1, 121), an external face (1 12, 122), and a central housing (1 16a, 126a, 216a, 226a) for receiving one of said bearings, said internal face of the flanges comprising fins (1 13, 123, 213, 223) arranged on a peripheral part of the central housing (1 16a, 126a, 216a, 226a), and
- a cooling system comprising a pair of internal fans (181, 182, 281, 282), each internal fan being fixedly mounted on the rotation shaft (160, 260) between the rotor body (150, 250) and a said bearings (171, 172, 271, 272), to create upon rotation of the shaft a first two-way air flow in the second recesses (28) of the rotor and a second air flow between each internal fan (181, 182, 281, 282) and the internal face (111, 121) of the front or rear flange, in which each internal fan (181, 182, 281, 282) has an internal face, an external face, a central opening (6) for the passage of the rotation shaft (160, 260), and an alternation of open radial sectors (2) and closed radial sectors (3) dividing the surface of the internal fan and separated by radial walls (13) orthogonal to the axis (X) forming projecting blades on the external face of the internal fan, the open radial sectors (2) comprising openings (2') and allowing air to enter inside the recesses (28) of the rotor, and the closed radial sectors (3) comprising a ramp-shaped surface (3, 3', 3") and allowing the exit of air circulating inside the recesses (28) of the rotor.

2. Electric machine according to Claim 2, in which each internal fans (181, 182, 281, 282) has a circular shape, with an internal face comprising a flat part (4) which radially extends from the central opening (6) towards the periphery of the fan and orthogonal to the central axis (X), said flat part (4) being extended by an inclined flat part (3') at the level of each closed radial sector (3) and by the opening (2') at the level of each open radial sector (2), said opening (2') being partly delimited by the radial walls (13).

3. Electric machine according to any one of claims 2 to 3, in which:
- the rotor has n magnetic poles (20) created by the flux generators (16) and the flux barriers,
- each magnetic pole (20) is covered by two radial sectors closed (3) and open (2) adjacent to an internal fan, and
- the two internal fans are mounted offset on the rotating shaft (160, 260) so as to match an open radial sector (2) of one internal fan with a closed radial sector (3) of the other internal fan along the same axis substantially parallel to the central axis (X).

4. Electric machine according to Claim 5, in which:
- the set of open (2) and closed (3) radial sectors of an internal fan is equal to 2.n, and
- the two internal fans are mounted angularly offset on the rotation shaft (160, 260) by an angle β equal to 360/(2.n),
n being an even integer between 2 and 12, and preferably equal to 4 or 8.

5. Electric machine according to one of the preceding claims, wherein the internal fans (181, 182, 281, 282) and the fins (1 13, 123, 213, 223) of the internal face (111, 121) of the flanges (110, 120) are able to direct the air radially towards the heads (191, 291) of the coils of the stator (190, 290), then to return said air flow from the heads (191, 291) of coils towards the center of the flanges first in a direction parallel to the axis (X) at the level of the heads (191, 291) of the coils, then radially towards the rotation shaft (160, 260), to form the second air flow created between each internal fan and the internal face of the front or rear flange.

6. Electric machine according to any one of the preceding claims, in which the fins (113, 123, 213, 223) of the internal face of the flanges are flat and have the general shape of a trapezoid comprising bases orthogonal to the central axis (X) and a side opposite the housing (116a, 126a, 216a, 226a) having a concavity.

7. Electric machine according to any one of the preceding claims, further comprising external cooling means for cooling the carcass and the front and rear flanges.

8. Electric machine according to Claim 7, in which the external cooling means comprise an external fan (140) arranged opposite the external face (122) of the rear flange (120) and fixedly mounted on the rotation shaft (160), to send outside air along the carcass (130) towards the front flange (110).

9. Electric machine according to claim 8, wherein
- the carcass (130) has an outer surface comprising a set of cooling fins (131) elongated substantially along an axis parallel to the axis (X) of the rotation shaft (160);
- the rear flange (120) comprises a central part (128a) in the form of a crown connected to a cylindrical peripheral part (128b), and at least one opening (127) arranged between said central part (128a) and said peripheral part (128b)) of the rear flange (120) to direct the outside air sent by the external fan (140) into passages formed by the set of cooling fins (131) of the external surface of the carcass (130).

10. Electric machine according to claim 9, wherein the external fan (140) has an external air drive wheel attached to the rotation shaft (160) and a cover plate (129) having orifices (129a) for the entry of outside air, said plate being fixed to the peripheral part (128b) of the rear flange (120).

11. Electric machine according to Claim 7, wherein the external cooling means comprise a cooling liquid circuit comprising an inlet (233) for the cooling liquid, an outlet (234) for the cooling liquid, and a network of conduits (235) in contact with the casing (230), wherein the coolant circulates to cool the casing (230) and the front (210) and rear (220) flanges, and wherein said network of ducts (235) is preferably a coil (236) integrated into the frame (230).

12. Electric machine according to claim 11, wherein the cooling liquid comprises water.

13. Electric machine according to one of the preceding claims, with variable synchronous reluctance.
